Europäisches Patentamt

European Patent Office

Office européen des brevets

(11) Publication number: **0 054 989**
**B1**

# EUROPEAN PATENT SPECIFICATION

(45) Date of publication of patent specification: **19.02.86**

(51) Int. Cl.⁴: **H 01 G 9/02**

(21) Application number: **81201306.8**

(22) Date of filing: **25.11.81**

(54) Electrolytic capacitor.

(30) Priority: **23.12.80 NL 8006997**

(43) Date of publication of application:
**30.06.82 Bulletin 82/26**

(45) Publication of the grant of the patent:
**19.02.86 Bulletin 86/08**

(84) Designated Contracting States:
**DE FR GB IT NL SE**

(56) References cited:
**DE-A-2 822 491**
**FR-A-1 226 589**
**FR-A-2 063 560**
**GB-A-1 046 238**
**US-A-2 759 132**
**US-A-3 931 552**

(73) Proprietor: **N.V. Philips' Gloeilampenfabrieken**
**Groenewoudseweg 1**
**NL-5621 BA Eindhoven (NL)**

(72) Inventor: **Eijkelenkamp, Antonius Johannes**
**Henricus**
**c/o INT. OCTROOIBUREAU B.V. Prof. Holstlaan 6**
**NL-5656 AA Eindhoven (NL)**
Inventor: **Held, Jan Hermannes**
**c/o INT. OCTROOIBUREAU B.V. Prof. Holstlaan 6**
**NL-5656 AA Eindhoven (NL)**

(74) Representative: **Jelmorini, Pius Antonius et al**
**INTERNATIONAAL OCTROOIBUREAU B.V. Prof.**
**Holstlaan 6**
**NL-5656 AA Eindhoven (NL)**

EP 0 054 989 B1

Courier Press, Leamington Spa, England.

**Description**

The invention relates to electrolytic capacitors having a predominantly non-aqueous electrolyte having a high conductivity.

GB—PS 1,302,965 discloses such a capacitor which is used in particular there where extremely high or extremely low temperatures may occur. Usually the capacitor comprises, positioned between the electrodes, a separator which is impregnated with the electrolyte. According to the above-mentioned publication the electrolyte contains, as the dissolved material, a salt of nitrophenol the anion of which contributes to anodic oxidation of the metal surface. The anion may be chosen from the anions of picric acid, picramic acid, styphnic acid, dinitrophenol and nitrophenol, while a substituted or non-substituted ammonium or an alkaline earth metal ion are mentioned. More specifically, ammonium-, triethylammonium-, triethanol-ammonium-, barium- and calcium-p-nitrophenolate are mentioned.

The high electrical conductivity of the electrolytes is mentioned as an important advantage. In practice it has appeared that the specified values cannot be obtained. When the recipes were reproduced, the values were found to be a factor of 3 to 10 lower.

When highly capacitive anode material, for example highly capacitive etched and formed foil, which have recently become available are used, then an electrolyte having a high conductivity is an absolute requirement in order to keep the electric losses of the capacitor low when said foil is used, the reason being that the product of resistance and capacitance of a capacitor must at least remain constant. This product $RC=C^*\rho Kd$ is independent of the geometrical surface of the foil.

In this equation

R=the resistance of the electrolyte-impregnated separator.

C=the capacitance of the capacitor.

$C^*$=the capacitance per unit of surface area.

$\rho$=the resistivity of the electrolyte.

K=a constant, relating to the material of the separator.

d=the thickness of the separator.

When $C^*$ increases the value of $\rho$ must decrease, or

$$\sigma(=\frac{1}{\rho}),$$

the specific conductivity of the electrolyte must increase.

The invention provides an electrolyte which has a higher specific conductivity (>5 mS/cm) than the measured specific conductivity of the examples included in the above-mentioned GB Patent Specification. Whereas generally electrolytes have a lower breakdown voltage according as the conductivity is higher, the electrolytes in accordance with the invention have a sufficiently high breakdown voltage (>100 Volts), to make them suitable for general use in the entire range up to 100 Volts.

According to the invention, an electrolytic capacitor comprising an anode provided with a dielectric oxide layer by anodic oxidation, a cathode, a separator and an electrolyte consisting of a solution of a salt of a nitrophenol in at least one dipolar organic solvent, is characterized in that dissolved in the electrolyte is a salt of 4-nitrophenol which may be substituted with one or more halogen, methyl and/or ethyl groups, in combination or not in combination with one or more additional nitro groups, and of a primary or secondary aliphatic or heterocyclic amine, with the exclusion of piperidine, or mixtures thereof in a concentration whereby a specific conductivity of at least 5 mS/cm is obtained.

It has to be noted, that in the FR—A—2063560 an electrolyte for an electrolytic capacitor has been described consisting of a solution of a salt of a weak acid and an organic base in a non-aqueous solvent. The weak acid may be a nitro-substituted phenol and the base is preferably piperidine or a quaternary ammonium hydroxide. However, in this publication it has not been recognized, that a specific choice of the solutes and a high concentration of them brings about an electrolyte having an unusually high value of the conductivity. As in one of the examples the combination trinitrofenol and piperidine has been given, however, in concentrations which will not furnish the minimum value of 5 mS at all, piperidine has been disclaimed in the definition of the invention.

In the DE—A—28 22 491 an electrolyte for electrolytic capacitors has been disclosed having also, as the electrolytes of this invention, the rare combination of a high conductivity and a high breakdown voltage. The electrolyte comprise a solution of phosphoric acid and at least a vanadate, molybdate or tungstate or mixtures thereof in an organic solvent, containing also a salt of an aromatic carboxylic acid such as picric acid and ammonium, an aliphatic amine or an aminoalcohol. The invented electrolyte needs no addition of a molybdate, vanadate or tungstate in order to combine a high breakdown voltage with a high conductivity.

In accordance with a further embodiment of the invented capacitor, improved properties are obtained when the electrolyte contains a small quantity of water (not more than 10% by weight). This measure achieves in the first place an increase of the breakdown voltage. In addition, the forming behaviour is improved and the leakage current is decreased. The temperature range in which the capacitor may be used is slightly limited thereby as the conductivity at low temperatures decreases to a more significant extent.

The breakdown voltage can be still further increased if in accordance with a further embodiment in addition to a small quantity of phosphoric acid or a solvable phosphate in a quantity of not more than 1% by weight preferably 0.02% by weight, boric acid or a soluble borate in a quantity of not more than 3% by weight, preferably 0.5% by weight, or chromic acid or a soluble (di)chromate in a quantity up to 1% by weight is added to the electrolyte. With this additions the capacitor may generally be used in the whole range up to and including 100 Volts with all the said dissolved $p$-nitrophenols. The dipolar solvent which preferably consists of an amide, as these materials yield the highest conductivities, may in addition thereto comprise further organic components, such as γ-butyrolactone, γ-valerolactone, ethylene glycol, ethylene glycol monomethyl ether, dimethyl-sulphoxide, propylene-carbonate, N-methyl-pyrrolidone. In some cases, conductivities above 5 mS cm can be reached, even without amides.

By way of example there now follows the specifications of some operational electrolytes which may be used in an aluminium foil wound capacitor.

| Electrolyte | Solvent | Salt | Concentration of the salt in the solution (weight %) | σ conductivity in mS/cm at 25°C |
|---|---|---|---|---|
| 1 | N,N-dimethylacetamide | diethylammonium-2-methyl, 4,6 dinitrophenolate | 25 | 5,9 |
| 2 | " | diethylammonium-2-chloro 4-nitrophenolate | 25 | 5,6 |
| 3 | " | monomethylammonium 4-nitrophenolate | 27 | 7,9 |
| 4 | " | dimethylammonium 4-nitrophenolate | 23 | 9,0 |
| 5 | a mixture of 80% dimethylformamide and 20% N-methylpyrrolidone | monoethylammonium 4-nitrophenolate | 25 | 7,3 |
| 6 | N,N-dimethylformamide | monopropylammonium 4-nitrophenolate | 24 | 7,4 |
| 7 | a mixture of 80% dimethylformamide and 20% γ-butylactone | dipropylammonium 4-nitrophenolate | 30 | 6,2 |
| 8 | N-monomethylformamide | butylammonium 4-nitrophenolate | 22 | 6,7 |
| 9 | N,N-dimethylformamide | ethylenediammonium 4-nitrophenolate | 23 | 6,6 |
| 10 | N,N-dimethylacetamide | pyrrolidinium 4-nitrophenolate | 30 | 7,8 |
| 11 | N,N-dimethylformamide | morpholinium 4-nitrophenolate | 35 | 6,7 |
| 12 | a mixture of 12% ethylene glycol and 88% N-monomethylformamide | piperazinium 4-nitrophenolate | 17 | 5,1 |
| 13 | N-monomethylformamide | tetramethylguanidinium 4-nitrophenolate | 20 | 8,8 |
| 14 | N,N-dimethylformamide | mono-ethanolammonium 4-nitrophenolate | 21 | 6,0 |

The capacitors are comprised in a conventional manner of an anode foil and a cathode foil, both provided with a contact lug, which are wound together with a porous separator arranged between these two foils. The anode foil is etched and thereafter formed at a voltage which is at least 20% above the operating voltage. The cathode foil is only etched, so that the cathode capacitance is much higher than the capacitance of the formed anode foil. The resultant wound body is impregnated with the electrolyte, thereafter inserted in a container and subjected again to a forming voltage. The diameter of the tested electrolytic capacitors is 15 mm and its length 30 mm.

Electrolyte (1) consisting of a 30% solution of diethylammonium 4-nitrophenolate $N,N$-dimethylacetamide, has a specific conductivity of 7.2 mS/cm at 25°C. 4% by weight of water is added to this electrolyte; as a result thereof the specific conductivity decreases to 6.0 mS/cm. The last-mentioned electrolyte is provided in electrolytic capacitors of 67 V, 326 µF and 12 V, 3940 µF, and subjected to a life test, at 125°C, the operating voltage being applied.

The result of this life test is shown in the following two Tables I and II. The values shown are the average values of 10 capacitors. The Tables show the initial values of the capacity (C) at 100 Hz, the equivalent series resistance (esr) at 100 Hz, the impedance (Z) measured at 100 kHz and the leakage current (LC) after 1 min, measured at the operating voltage. After these measurements the electrolytic capacitors are stored for the stated periods at 125°C, the operating voltage being applied to them, and cooled thereafter to room temperature, whereafter the measurements are repeated. The changes in the above-mentioned quantities are shown in percents.

TABLE I

Life test 125°C            Operating voltage 67 V
Initial value of C (100 Hz)            326 µF
                esr (100 Hz)            121 mΩ
                Z (100 kHz)            49 mΩ
                LC (after 1 min)            50 µA

| Time (hours) | ΔC (%) | Δesr (%) | ΔZ (%) | LC (µA) |
|---|---|---|---|---|
| 96 | −2,0 | 3,2 | 2,8 | 24 |
| 256 | −2,4 | 2,7 | 1,0 | 8 |
| 500 | −2,6 | 8,0 | 5,2 | 7 |
| 1000 | −3,2 | 12,6 | 12,1 | 9 |

TABLE II

Life test 125°C            Operating voltage 12 V
Initial value of C (100 Hz)            3940 µF
                esr (100 Hz)            53.4 mΩ
                Z (100 kHz)            37.5 mΩ
                LC (after 1 min)            108 µA

| Time (hours) | C (%) | esr (%) | Z (%) | LC (µA) |
|---|---|---|---|---|
| 96 | −4,2 | 0,4 | 1,1 | 40 |
| 256 | −5,3 | −1,8 | −2,5 | 21 |
| 500 | −6,3 | 1,3 | 0,7 | 20 |
| 1000 | −7,5 | 9,0 | 8,2 | 20 |

From these Tables it appears that the capacity decreases somewhat, but remains fairly constant, that the impedance and the equivalent series resistance gradually increase, and that the leakage current, which has a very low level of $2 \times 10^{-3}$CV, significantly improves up to 256 hours and remains constant thereafter.

In the following Tables III and IV capacitors using electrolyte 1 in accordance with the invention are compared with capacitors comprising a conventional electrolyte 2. Electrolyte 2 is a known, non-aqueous solution of the following composition:

5

**0 054 989**

1000 g *N,N*-dimethylacetamide
165 g ethylene glycol
100 g picric acid
55 g ammonium pentaborate

The conductivity at 25°C is 4.2 mS/cm. When 4% by weight of water is added to the electrolyte the conductivity decreases to 3.6 mS/cm.

These Tables show for both electrolytes, without water and with 4% by weight of water, the result of a shelf test at 105°C, no voltage being applied, for electrolytic capacitors having an operating voltage of 70 V and 11 V, respectively. The electrical quantities are measured at the start of the test and after 96 hours testing.

TABLE III

| Electro-lyte | Water content (wt.%) | C 100 Hz (µF) | ΔC (%) | Esr 100 Hz (mΩ) | ΔEsr (%) | Z 100 KHz (mΩ) | ΔZ (%) | LC (0 u) (µA) | LC (96 u) (µA) |
|---|---|---|---|---|---|---|---|---|---|
| 1 | 0 | 434 | −1,8 | 131 | −11,0 | 58,7 | −5,6 | 1140 | 3300 |
|  | 4 | 436 | −2,5 | 142 | −9,2 | 62,5 | −3,4 | 55 | 60 |
| 2 | 0 | 431 | −1,6 | 176 | −12,4 | 85,3 | −10,7 | 499 | 315 |
|  | 4 | 436 | −1,8 | 196 | −14,0 | 94,1 | −11,9 | 61 | 46 |

TABLE IV

| Electro-lyte | Water content (wt.%) | C 100 Hz (µF) | ΔC (%) | Esr 100 Hz (mΩ) | ΔEsr (%) | Z 100 KHz (mΩ) | ΔZ (%) | LC (0 hr) (µA) | LC (96 hrs) (µA) |
|---|---|---|---|---|---|---|---|---|---|
| 1 | 4 | 2190 | −3,7 | 78,7 | −2,2 | 54,2 | −0,9 | 36 | 48 |
| 2 | 4 | 2200 | −3,9 | 122 | −10,1 | 82,9 | −8,8 | 53 | 29 |

The advantage of electrolyte 1 relative to electrolyte 2 is apparent from these Tables, particularly from the esr and the impedance which have a lower value and a greater stability. This improved stability appears particularly for low-voltage electrolytic capacitors. Table III shows in particular the advantageous influence on the leakage current, of the addition of water both prior to and after the test.

In Tables V and VI the low-temperature properties of the electrolytes 1 and 2 are compared with each other, 4% by weight of water having been added to each of them.

TABLE V

Impedance ratio at 100 Hz, electrolyte 1.
Z(−40°C)/Z(+20°C)=1.11

| T (°C) | Z (1 KHz) mΩ | Z (10 KHz) mΩ |
|---|---|---|
| +20 | 385 | 82 |
| −25 | 519 | 96 |
| −40 | 913 | 698 . |

# 0 054 989

TABLE VI

Impedance ratio at 100 Hz electrolyte 2
Z(−40°C/Z(+20°C)=1.30

| T (°C) | Z (1 KHz) mΩ | Z (10 KHz) mΩ |
|---|---|---|
| +20 | 402 | 122 |
| −25 | 842 | 631 |
| −40 | 2255 | 1865 |

It appears that at 100 Hz the impedance ratio for electrolyte 1 is much better than for electrolyte 2. The impedance at 1 KHz and 10 KHz are considerably lower for electrolyte 1 than for electrolyte 2, particularly at a lower temperature. The electrolytes 1 and 2 are not suitable for use at −55°C as crystallization occurs. It is possible to compose, within the framework of the invention, electrolytes which are suitable for use to said temperature. Table VII comprises 5 examples of electrolytes which all have the following composition:

1 mole diethylammonium-4-nitrophenolate
8 mole solvent
2 mole co-solvent,

more specifically as follows:

TABLE VII

| Electrolyte | Solvent | Co-solvent |
|---|---|---|
| 3 | N,N-dimethylacetamide | N-methylacetamide |
| 4 | N,N-dimethylacetamide | N,N-dimethylformamide |
| 5 | N,N-dimethylformamide | N-methylformamide |
| 6 | N,N-dimethylformamide | N-methylpyrrolidone |
| 7 | N,N-dimethylformamide | ethylene glycol |

Electrolytic capacitors were produced with these electrolytes in accordance with the instruction described in the foregoing. The following Table VIII shows the ratio of the impedance Z, measured at 100 Hz, at −40° and −55°C with respect to the impedance at +20°C, 2% by weight of water as well as 4% by weight of water having been added.

TABLE VIII

| Electrolyte | Z(−40°C)/Z(+20°C) | | Z(−55°C)/Z(+20°C) | |
|---|---|---|---|---|
| | 2% $H_2O$ | 4% $H_2O$ | 2% $H_2O$ | 4% $H_2O$ |
| 3 | 1,08 | 1,09 | 3,05 | 1,40 |
| 4 | 1,07 | 1,07 | 1,69 | 1,16 |
| 5 | 1,04 | 1,06 | 1,08 | 1,09 |
| 6 | 1,05 | 1,04 | 1,09 | 1,11 |
| 7 | 1,06 | 1,04 | 1,13 | 1,17 |

This Table shows that the impedance ratio at −40°C relative to +20°C is even more advantageous than for electrolyte 1. The International Electric Committee for this type of electrolytic capacitor require a factor 4.

Even the ratio of the impedance at −55°C relative to +20°C appears to be very advantageous.

7

**0 054 989**

**Claims**

1. An electrolytic capacitor, comprising an anode provided with a dielectric oxide layer by anodic oxidation, a cathode, a separator and electrolyte consisting of a solution of a salt of a nitrofenol dissolved in at least one dipolar organic solvent, characterized in that the salt has an acid radical consisting of 4-nitrofenol which may be substituted by one or more halogen-, methyl- and/or ethyl groups, in combination or not in combination with one or more additional nitro groups, and an alkaline radical consisting of a primary or secondary alifatic or heterocyclic amine, with the exclusion of piperidine, or mixtures thereof, the salt being dissolved in the solvent in such a concentration that a specific conductivity of at least 5 mS/cm is attained.

2. An electrolytic capacitor as claimed in Claim 1, characterized in that the electrolyte furthermore a quantity of not more than 10% by weight of water.

3. An electrolytic capacitor as claimed in Claim 1 or Claim 2, characterized in that the electrolyte furthermore contains a quantity of not more than 1% by weight of phosphoric acid or a soluble phosphate.

4. An electrolytic capacitor as claimed in Claim 1, Claim 2 or Claim 3, characterized in that the electrolyte furthermore contains a quantity of not more than 3% by weight of boric acid or soluble borate.

5. An electrolytic capacitor as claimed in Claims 1, 2, 3 or 4, characterized in that the electrolyte furthermore contains a quantity of not more than 1% by weight of chromic acid or soluble (di)chromate.

**Patentansprüche**

1. Elektrolytischer Kondensator mit einer Anode, die durch anodische Oxidation mit einer dielektrischen Oxidschicht versehen ist, einer Kathode, einem Separator und einem Elektrolyten, der aus einer Lösung eines Salzes eines Nitrophenols in mindestens einem dipolaren organischen Lösungsmittel besteht, dadurch gekennzeichnet, dass das Salz einen Säurerest hat, der aus 4-Nitrophenol besteht, das mit einer oder mehreren Halogen-Methyl- und/oder Äthylgruppen substituiert sein kann, gegebenenfalls zusammen mit einer oder mehreren zusätzlichen Nitrogruppen, und einen alkalischen Rest, der aus einem primären oder sekundären aliphatischen oder heterozyklischen Amin besteht, mit Ausnahme von Piperidin oder Gemischen derselben, wobei das Salz in einer derartigen Konzentration in dem Lösungsmittel gelöst ist, dass eine spezifische Leitfähigkeit von wenigstens 5 mS/cm erreicht wird.

2. Elektrolytischer Kondensator nach Anspruch 1, dadurch gekennzeichnet, dass der Elektrolyt ausserdem eine Menge von höchstens 10 Gew.% Wasser enthält.

3. Elektrolytischer Kondensator nach Anspruch 1 oder 2, dadurch gekennzeichnet, dass der Elektrolyt ausserdem eine Menge von höchstens 1 Gew.% Phosphorsäure oder lösliches Phosphat enthält.

4. Elektrolytischer Kondensator nach Anspruch 1, 2 oder 3, dadurch gekennzeichnet, dass der Elektrolyt ausserdem eine Menge von höchstens 3 Gew.% Borsäure oder lösliches Borat enthält.

5. Elektrolytkondensator nach Anspruch 1, 2, 3 oder 4, dadurch gekennzeichnet, dass der Elektrolyt ausserdem eine Menge von höchstens 1 Gew.% Chromsäure oder lösliches (Di)Chromat enthält.

**Revendications**

1. Condensateur électrolytique comportant une anode munie d'une couche en oxyde diélectrique par oxydation anodique, d'une cathode, d'un séparateur et d'un électrolytique constitué par une solution d'un sel de nitrophénol dans au moins un solvant organique dipolaire, caractérisé en ce qu'un sel de 4-nitrophénol est dissous dans l'électrolyte et peut porter comme substituant au moins un ou plusieurs groupe(s) halogène, méthyle et/ou éthyle en combinaison ou non avec un ou plusieurs groupe(s) nitro additionnels et d'une amine hétérocyclique ou aliphatique primaire ou secondaire, à l'exclusion de pipéridine, ou leurs mélanges dans une concentration telle qu'une conductivité spécifique d'au moins 5 mS/cm est atteinte.

2. Condensateur électrolytique selon la revendication 1, caractérisé en ce que l'électrolyte contient en outre une quantité d'au maximum 10% en eau.

3. Condensateur électrolytique selon la revendication 1 ou la revendication 2, caractérisé en ce que l'électrolyte contient en outre une quantité d'au maximum 1% en poids d'acide phosphorique ou d'un phosphate soluble.

4. Condensateur électrolytique selon la revendication 1, la revendication 2 ou la revendication 3, caractérisé en ce que l'électrolyte contient en outre une quantité d'au maximum 3% en poids d'acide borique ou de borate soluble.

5. Condensateur électrolytique selon la revendication 1, 2, 3 ou 4, caractérisé en ce que l'électrolyte contient en outre une quantité d'au maximum 1% en poids d'acide chromique ou de (di)chromate soluble.

8